# EUROPÄISCHE PATENTSCHRIFT

(11) **EP 3 560 788 B1**
(45) Veröffentlichungstag und Bekanntmachung des Hinweises auf die Patenterteilung: **09.06.2021**
(21) Anmeldenummer: 19171172.0
(22) Anmeldetag: 25.04.2019
(51) Int. Cl.: B61D 23/02

(54) **TRITTSTUFENVORRICHTUNG**
STEP DEVICE
DISPOSITIF FORMANT MARCHES

(30) Priorität: 25.04.2018 DE 202018102317 U
(43) Veröffentlichungstag der Anmeldung: 30.10.2019
(73) Patentinhaber: EDAG Engineering GmbH, 65205 Wiesbaden (DE)
(72) Erfinder: WIEGAND, Thorsten, 36132 Eiterfeld-Ufhausen (DE)
(74) Vertreter: Isarpatent

(56) Entgegenhaltungen:
- EP-A1- 0 559 624
- DE-A1-102007 014 075
- US-A- 4 623 160

## Beschreibung

### TECHNISCHES GEBIET

Die Erfindung betrifft eine Trittstufenvorrichtung für ein Fahrzeug.

### TECHNISCHER HINTERGRUND

Trittstufen werden meist für große Fahrzeuge, wie etwa Nutzfahrzeuge, Busse, Landmaschinen, Baumaschinen, etc. eingesetzt. Der Aufbau und die Funktionsweise derartiger Trittstufen für Fahrzeuge sind allgemein bekannt und bedürfen daher keiner näheren Erläuterung Die DE102007014075 A1 wird als nächstliegender Stand der Technik angesehen und beschreibt eine einklappbare Trittstufe für ein Wohnmobil, die mindestens zwei Stufen umfasst. Die einklappbare Trittstufe zeichnet sich dadurch aus, dass eine erste Stufe bewegbar an dem Aufhängungsrahmen des Wohnmobils oder dergleichen angebracht werden kann, und dass die zweite Stufe bewegbar an der ersten Stufe angebracht ist, während die eventuellen folgenden Stufen bewegbar an einer oder mehreren der vorigen Stufen angebracht sind. Dabei kann die Trittstufe mindestens teilweise zusammengeklappt und bis in oder unter den Rahmen des Wohnmobils oder dergleichen bewegt werden, wobei die zweite Stufe aufwärts bis auf eine Höhe über der Stauposition bewegt wird, wenn die Trittstufe von der verstauten Position zur Gebrauchsposition bewegt wird. In den beschriebenen Ausführungsbeispielen wird die erste Stufe entweder in einer rein linearen Bewegung parallel zum Erdboden bewegt oder in einer Schwenkbewegung nichtlinear bewegt.

In der Deutschen Patentanmeldung DE 10 2008 058385 A1 ist eine Nutzfahrzeugtank-Trittstufenvorrichtung mit einer wannenförmigen Trittstufenmulde mit einem Boden von im Wesentlichen rechteckiger Grundfläche, mit vier Seitenwandabschnitten und mit ausgerundeten inneren Ecken und Kanten sowie mit zumindest einer Trittstufe, die in der Trittstufenmulde angeordnet ist, beschrieben. Der Nutzfahrzeugtank hat dabei zumindest eine konvex gewölbte Seitenfläche mit einer Ausnehmung, in die die Trittstufenmulde eingesetzt ist, und die Seitenwandabschnitte erstrecken sich von einer Wanneninnenseite in einen nach außen gekrümmten Wannenrand, der mit einem Rand der Ausnehmung der Seitenfläche des Nutzfahrzeugtanks fluiddicht verbunden ist. Ein Seitenwandabschnitt der vier Seitenwandabschnitte der Trittstufenmulde verläuft nahe einem Boden des Nutzfahrzeugtanks und parallel zu diesem. Die Trittstufe weist eine Breite auf, die geringer ist als eine maximale Breite der Trittstufenmulde, und der untere Seitenwandabschnitt hat eine in den Nutzfahrzeugtank sich hinein erstreckende Tiefe, die zumindest zwei Dritteln einer Tiefe der Trittfläche der Trittstufe entspricht, wodurch der untere Seitenwandabschnitt eine Abstützfläche für die Trittstufe bereitstellt, die allein mittels einer Abstützvorrichtung auf der Abstützfläche befestigt und in der Trittstufenmulde festgelegt ist.

### ZUSAMMENFASSUNG DER ERFINDUNG

Die vorliegende Erfindung setzt sich die Aufgabe, eine verbesserte Trittstufenvorrichtung für ein Fahrzeug bereitzustellen.

Diese Aufgabe wird erfindungsgemäß durch eine Trittstufenvorrichtung mit den Merkmalen des Patentanspruchs 1 gelöst.

Demgemäß ist vorgesehen:
Eine Trittstufenvorrichtung, die mit einem Fahrzeug verbindbar oder verbunden ist, mit mindestens zwei Trittstufen, mit einem Gehäuse, das eine Verbindungsschnittstelle aufweist, über welche das Gehäuse mit einem Teil eines Unterbaus des Fahrzeugs verbindbar oder verbunden ist, mit einen Antrieb, der derart ausgebildet und bezogen auf die Trittstufen derart angeordnet ist, um mindestens eine der Trittstufen aus einer Verstauposition, in der die Trittstufen vollständig unterhalb des Fahrzeuges in oder an dem Gehäuse angeordnet sind, in eine Einstiegsposition seitlich neben oder hinter dem Fahrzeug zu bewegen, eine erste Trittstufe bei der Bewegung aus der Verstauposition in die Einstiegsposition in eine Richtung in oder quer zu einer Fahrtrichtung des Fahrzeugs und in Richtung einer Fahrgastzelle des Fahrzeugs nach oben zu bewegen und wenigstens eine zweite Trittstufe in oder quer zu der Fahrtrichtung des Fahrzeugs und in Richtung einer Fahrbahn nach unten bewegt.

Die Trittstufenvorrichtung soll das Ein- und Aussteigen aus einem Fahrzeug erleichtern, zum Beispiel für ältere Personen, geheingeschränkte Personen und Kinder. Die Trittstufenvorrichtung kann bei der Neubestellung eines Fahrzeugs als Zusatz bestellt werden, soll aber insbesondere als Nachrüstsatz angeboten werden, beispielsweise für Minivans und SUV.

Ein Gehäuse im Sinne der Anmeldung kann ein Verbindungssteg sein, der mit dem Unterboden des Fahrzeugs verbunden oder verbindbar und mit dem zum Beispiel der Antrieb verbunden ist; es kann sich um eine Box handeln, in der die Trittstufenvorrichtung in der Verstauposition zumindest teilweise verstaut ist. Die Box kann einen Deckel umfassen, um die Trittstufenvorrichtung oder zumindest Teile davon vor Spritzwasser zu schützen. Das Gehäuse kann eine Rahmenkonstruktion sein, wobei es sich bei dem Rahmen nicht um einen geschlossenen Rahmen handeln muss. Als Gehäuse soll grundsätzlich jedes Bauteil gelten, das die Trittvorrichtung mit dem Fahrzeug verbindet.

Die Bewegung der zweiten Trittstufe aus der Verstauposition in die Einstiegsposition ist bevorzugt eine rein lineare Bewegung, respektive eine Bewegung, die durch wenigstens einen linearen Antrieb erzeugt wird. Dabei kann die zweite Trittstufe einen Stufenkopf oder ein Trittbrett umfassen, mit einer Oberseite, die eine Auftrittsfläche der Stufe bildet. Mit dem Stufenkopf oder Trittbrett kann/können ein Stufenarm, zwei Stufenarme oder drei und mehr Stufenarme verbunden sein, die eine Verbindung zwischen dem Antrieb und dem Stufenkopf herstellen. Der Stufenkopf oder das Trittbrett und der oder die Stufenarm/e können miteinander gefügt, zum Beispiel verschraubt, vernietet oder verschweißt sein. Alternativ können Stufenkopf oder Trittbrett und Stufenarm/e in einem Stück geformt sein, beispielsweise geschmiedet, gegossen, durch spanabhebende Bearbeitung oder in einem Sinterverfahren oder einem anderen geeigneten Verfahren hergestellt sein. Als Material kommen Kunststoff, Metall, wie Stahl, Aluminium, Legierung mit Stahl- oder Aluminiumanteil, und andere Werkstoffe mit ähnlichen Eigenschaften in Frage. Die Oberseite des Stufenkopfes oder des Trittbretts kann eine rutschhemmende Oberfläche aufweisen, zum Beispiel durch eine entsprechende Bearbeitung der Oberfläche, eine Beschichtung oder eine Auflage aus einem rutschhemmenden Material.

Der Antrieb liegt bevorzugt parallel zu der oder den Trittstufen. Wenn die Trittstufe zwei oder mehr Stufenarme umfasst, liegen diese bevorzugt im Wesentlichen parallel zueinander und stützen die Trittstufe zum Beispiel an den beiden seitlichen Enden, die quer zum Fahrzeug weisen, und/oder bei mehr als zwei Stufenarmen zusätzlich in wenigstens einer weiteren Position ab. Der Antrieb kann zur Trittstufe mit zwei oder mehr Stufenarmen im Wesentlichen mittig angeordnet sein, um zu verhindern, dass die Trittstufe beim Aus- und Einfahren sich verkantet. Der Antrieb ist bevorzugt direkt mit der zweiten Trittstufe in einem Drehgelenk verbunden, das heißt, die Kraft des Antriebs kann direkt auf die zweite Trittstufe wirken. Es können auch mehr als ein Antrieb zur Bewegung der Trittvorrichtung mit den wenigstens zwei Trittstufen vorgesehen sein. Zum Beispiel kann die erste Trittstufe mit einem ersten Antrieb bewegt werden, die zweite Trittstufe mit einem zweiten Antrieb und jede weitere Trittstufe mit einem weiteren Antrieb. In diesem Fall können die Antriebe, respektive die Bewegungen der Antriebe, beispielsweise über eine Steuerung der Trittstufenvorrichtung miteinander synchronisiert oder über ein Getriebe, wie ein Differential- oder Ausgleichsgetriebe miteinander verbunden sein.

Die erste Trittstufe ist bevorzugt im Wesentlichen aufgebaut wie die zweite Trittstufe. Die Bewegung der ersten Trittstufe kann sich in zwei Bewegungsabschnitte unterteilen. Der erste Bewegungsabschnitt verläuft dann insbesondere gemeinsam mit der Bewegung der zweiten Trittstufe. Bevorzugt liegt die erste Trittstufe in diesem Bewegungsabschnitt relativ zu der zweiten Trittstufe in einer im Wesentlichen festen Position, so dass die erste Trittstufe gemeinsam mit der zweiten Trittstufe in die gleiche Richtung mit identischer Geschwindigkeit linear bewegt wird. Es ist bevorzugt, dass die Bewegung der ersten Trittstufe aus der Position, die sie während der Linearbewegung der zweiten Trittstufe einnimmt, in Richtung der Fahrgastzelle, das heißt, nach oben weg von der zweiten Trittstufe, erst dann beginnt, wenn die wenigstens eine zweite Trittstufe in der Einstiegsposition ist. Die Einstiegsposition kann eine Endposition der zweiten Trittstufe sein, eine Rastposition, in die die Trittstufenvorrichtung zum Beispiel einfährt, wenn die erste Trittstufe und die zweite Trittstufe in oder nahezu in der Einstiegposition sind. Im letzteren Fall beginnt die Bewegung der ersten Trittstufe dann, wenn die zweite Trittstufe eine von der Einstiegsposition unterschiedliche Auslöseposition erreicht, in der die Bewegung der ersten Trittstufe in deren Einstiegsposition durch den Antrieb startet.

Die erste Trittstufe und die wenigstens eine zweite Trittstufe können in der Verstauposition und/oder in der Einstiegsposition jeweils verriegelt sein, um ein ungewolltes Ein- oder Ausfahren der Trittstufenvorrichtung zu verhindern. Die Verriegelung kann rein mechanisch in bekannter Weise erfolgen, zum Beispiel durch Hintergreifen eines Rastelements, durch Formschluss etc., wenn die Trittstufenvorrichtung und/oder das Gehäuse entsprechend hergerichtet ist/sind. Alternativ kann zur Verriegelung der Trittstufenvorrichtung der Antrieb verriegelt werden.

Die erste Trittstufe und die wenigstens eine zweite Trittstufe können über eine Mechanik gekoppelt sein, so dass die erste Trittstufe relativ zur zweiten Trittstufe bewegt werden kann. Die Mechanik kann beispielsweise ein Hebel oder ein Hebelgelenk umfassen, weniger bevorzugt umfasst die Mechanik zusätzlich zum Antrieb für die Trittstufenvorrichtung einen weiteren Antrieb, der die erste Trittstufe relativ zur zweiten Trittstufe bewegt.

Die Mechanik kann zum Beispiel ein Verbindungselement umfassen, das mit der ersten Trittstufe in einem ersten Gelenk, bevorzugt einem ersten Drehgelenk, und mit der wenigstens zweiten Trittstufe in einem zweiten Gelenk, bevorzugt einem zweiten Drehgelenk, verbunden ist. Dabei kann ein Drehgelenk beispielsweise durch eine Bohrung und ein in der Bohrung drehgeführten Zapfen, oder durch eine Öffnung, beispielsweise in Form einer Langnut, und einen in der Langnut linear und drehgeführten Zapfen, oder eine andere ähnliche Verbindung von zwei Elementen gebildet sein. Eine Öffnung im Sinne der Anmeldung kann ein durch das Material durchgehendes Loch sein, oder eine Vertiefung, die in das Material hineingearbeitet ist, ohne das Material zu durchbrechen.

Erfindungsgemäß umfasst das Gehäuse wenigstens eine erste Offnung als Führungsnut oder eine erste Kulisse , die eine Bewegung der ersten Trittstufe und eine Bewegung der wenigstens einen zweiten Trittstufe aus der Verstauposition zumindest in eine Zwischenposition, in der die wenigstens eine zweite Trittstufe die Auslöseposition oder die Einstiegsposition erreicht haben kann, steuert. Diese Bewegung kann, wie bereits beschrieben, eine lineare Bewegung sein, die zum Beispiel von einem Kolben, der pneumatisch oder hydraulisch angetrieben ist, durch eine elektrisch angetriebene Zahn- oder Gewindestange oder eine andere bekannte und geeignete Technik bewirkt wird.

Als Kulisse wird beispielsweise eine kurvige Nut verstanden, in der ein Hebel mit einem Zapfen geführt wird, so dass der Hebel und ein mit dem Hebel verbundenes Teil den Kurven der Nut folgen. Eine Kulisse ist folglich im weitesten Sinne ein Teil einer Führung mit der mittels eines Linearantriebs eine Kurvenbewegung bewirkt werden kann.

Die wenigstens eine zweite Trittstufe kann wenigstens eine zweite Öffnung als Führungsnut oder eine zweite Kulisse umfassen, in die ein zweites Eingriffselement, das mit der Mechanik fest verbunden oder gefügt oder mit der Mechanik in einem Stück gefertigt ist, eingreift, wobei die zweite Führungsnut oder zweite Kulisse und das zweite Eingriffselement das zweite Drehgelenk bilden.

Das heißt, dass die Mechanik beispielsweise eine Stange, beispielsweise eine Flachstange, eine Viereckstange oder eine Rundstange, sein kann, die an einem ersten axialen Ende das erste Eingriffselement zum Eingreifen in die erste Kulisse und an dem anderen axialen Ende das zweite Eingriffselement zum Eingreifen in die zweite Kulisse umfasst. Das erste und das zweite Eingriffselement können von der Stange in gleiche Richtung oder bevorzugt in entgegengesetzte Richtungen abstehen. Die Stange kann durchgehend gebildet sein oder aus wenigstens zwei Teilstücken bestehen, die in einem Gelenk, beispielsweise in einem Schwenkgelenk mit einem maximalen Schwenkwinkel von < 360° miteinander verbunden sind. Die Schwenkebenen der beiden Teilstücke verlaufen bevorzugt im Wesentlichen parallel. Schließlich kann die Stange auch als mehr als zwei Teilstücken bestehen, wobei zwei aneinanderstoßende oder sich bereichsweise überlappende Teilstücke jeweils in einem Gelenk, beispielsweise Schwenkgelenk, Drehgelenk, Teleskopgelenk, etc., miteinander verbunden sein können. Statt durch die eine Stange kann die Mechanik auch durch zwei oder mehr Stangen gebildet sein.

Mit solch einer Mechanik kann die Trittstufenvorrichtung bewegt werden. Insbesondere kann mit der Mechanik die erste Trittstufe aus der Zwischenposition in die Einstiegsposition bewegt werden. Bevorzugt beginnt die Bewegung der ersten Trittstufe, wenn die zweite Trittstufe nahezu oder vollständig ihre Einstiegsposition erreicht hat, in die sie durch den Linearantrieb bewegt wird. Dabei kann die zweite Trittstufe in der Einstiegposition auch bereits verrastet sein. Die Bewegung führt die erste Trittstufe aus der Zwischenposition, in der sie relativ zu der zweiten Trittstufe im Wesentlichen in der gleichen Position liegen kann wie in der Verstauposition, weg von der zweiten Trittstufe, so dass sich ein Abstand zwischen der zweiten Trittstufe und der ersten Trittstufe vergrößert. Gleichzeitig kann die erste Trittstufe in einer zum Beispiel bogenförmigen Bewegung an eine Außenseite der Karosserie herangeführt werden, um einem Spalt zwischen einer der Karosserie zugewandten Kante der ersten Trittstufe und der Karosserie zu minimieren. Die Bewegung der ersten Trittstufe relativ zu der zweiten Trittstufe kann im Wesentlichen durch die zweite Kulisse vorgegeben sein.

Alternativen zu der Kulissenführung sind zum Beispiel eine gekoppelte überlagerte Bewegung aus linear-rotatorischer Hebelbewegung oder aus anderen sinnvollen und geeigneten Funktionselementen, zum Beispiel eine Verschiebekeillösung, ein Kniehebelmechanismus, eine Spiralspindelantrieb, etc.

Die Trittstufenvorrichtung kann unabhängig vom Antrieb und Bewegungssystem einstellbar sein. Das heißt einzelne Parameter der oder einzelner der Bewegungssysteme können an die Fahrzeugkonfiguration angepasst werden, um Fahrzeughöhenunterschiede oder Unterschiede in der Bodenfreiheit von Fahrzeugen verschiedener Hersteller und/oder unterschiedlicher Konfigurationen ausgleichen zu können. Solche Unterschiede können zum Beispiel eine werksseitig vorgegebene oder durch Tuning veränderte Fahrgestellhöhe sein, oder durch die Reifengröße beeinflusst werden. So kann beispielsweise die Neigung des Gehäuses zum Fahrzeug verstellt werden, wodurch die wenigstens eine zweite Trittstufe und damit im Regelfall auch die erste Trittstufe in relativ zum Fahrzeug unterschiedliche Einstiegspositionen bewegt werden, ohne dass dadurch der Abstand zwischen den Trittstufen beeinflusst wird.

Dabei kann die Bewegung der ersten Trittstufe durch denselben Linearantrieb erfolgen, der die zweite Trittstufe aus der Verstauposition in die Einstiegsposition bewegt. So kann der Linearantrieb in einem ersten Bewegungsabschnitt die erste Trittstufe zusammen mit der zweiten Trittstufe aus der Verstauposition in eine erste Position oder Zwischenposition bewegen. Der Linearantrieb bewegt anschließend in einem zweiten Bewegungsabschnitt die erste Trittstufe aus der Zwischenposition bis in die Einstiegsposition nach oben, weg von der zweiten Trittstufe, und die zweite Trittstufe in ihre Einstiegsposition, die unterhalb der ersten Trittstufe und weiter entfernt vom Fahrzeug ist. Die jeweilige Einstiegsposition kann beispielsweise durch einen Anschlag des ersten Eingriffselements in der ersten Nut, respektive durch einen Anschlag des zweiten Eingriffselements in der zweiten Nut vorgegeben ist. Die aus Sicherheitsgründen erwünschte Verriegelung der ersten Trittstufe und/oder der zweiten Trittstufe kann rein mechanisch geschehen oder der Linearantrieb kann verriegelt werden, wenn er die jeweilige Endposition erreicht hat. Als Endpositionen werden die beiden Positionen des Linearantriebs angesehen, in der die erste Trittstufe und die zweite Trittstufe in der Verstauposition liegen, und in der die erste Trittstufe und die zweite Trittstufe in der Einstiegsposition sind.

In der Verstauposition kann eine Trittoberfläche der ersten Trittstufe schräg zu einer Trittoberfläche der wenigstens einen zweiten Trittstufe, bevorzugt in Richtung auf die Trittoberfläche der wenigstens einen zweiten Trittstufe zu geneigt, angeordnet sein. Die Trittoberfläche der ersten Trittstufe und die Trittoberfläche der wenigstens einen zweiten Trittstufe können in der Einstiegsposition in verschiedenen Ebenen und im Wesentlichen parallel zueinander verlaufen. Die erste Trittstufe und die wenigstens eine zweite Trittstufe können übereinander oder relativ zueinander seitlich versetzt angeordnet sein. In beiden Fällen können sich die erste Trittstufe und die zweite Trittstufe zumindest teilweise in Richtung quer zur Fahrzeuglängsachse und/oder quer zur Fahrzeugquerachse überlappen. Ein vertikaler Abstand zwischen der ersten Trittstufe und der wenigstens einen zweiten Trittstufe kann zwischen 18 cm und 25 cm, bevorzugt zwischen 20 cm und 22 cm und besonders bevorzugt ca. 20 cm betragen. Umfasst die Trittstufenvorrichtung mehr als zwei Trittstufen, so liegt der Abstand zwischen jeweils zwei benachbarten Trittstufen im Wesentlichen im gleichen Bereich. Bevorzugt ist bei der Trittstufenvorrichtung in der Einstiegsposition der Abstand zwischen dem Boden und der dem Boden nächsten Trittstufe, zum Beispiel der zweiten Trittstufe, im Idealfall ebenfalls so groß, wie der Abstand zwischen zwei benachbarten Trittstufen. Als Idealfall wird der Fall angesehen, wenn das Fahrzeug auf einer absolut ebenen Fläche aufsteht, was selten der Fall sein wird. Ein im Wesentlichen gleicher Abstand vom Boden zur wenigstens eine zweiten Trittstufe, von dieser zur ersten Trittstufe und eventuell von der ersten Trittstufe in den Innenraum ist von Vorteil, um ein Stolpern, Hängenbleiben oder Abrutschen des Nutzers zu vermeiden.

Eine Trittstufenvorrichtung kann am Fahrzeug grundsätzlich unterhalb jeder Tür angebracht sein, das heißt, unterhalb der Fahrertür, unterhalb der Beifahrertür, unterhalb einer oder jeder der Hintertüren auf der Fahrer- und der Beifahrerseite und/oder unterhalb der Heckklappe oder Hecktür. In der Verstauposition ist die Trittstufenvorrichtung bevorzugt vollständig oder zumindest im Wesentlichen vollständig unterhalb des Fahrzeugs angeordnet, um die Gefahr von Verletzungen durch die Trittstufenvorrichtung bei fahrendem Fahrzeug zu eliminieren. In der Verstauposition liegt die Trittstufenvorrichtung möglichst dicht am Unterboden des Fahrzeugs an, um dessen Bodenfreiheit nicht über ein erforderliches Maß hinaus einzuschränken. Dazu kann beispielsweise zumindest die erste Trittstufe in der Verstauposition wenigstens teilweise hinter einer nach unten vorstehenden Fahrzeugkante oder neben einem Fahrzeugschweller unterhalb des Kraftfahrzeugs liegen. Um in diese Position zu gelangen kann die erste Trittstufe bei der Bewegung der wenigstens einen zweiten Trittstufe in die Verstauposition oder die Einstiegsposition unter der Fahrzeugkante durch tauchen und am Ende der Bewegung in die Verstauposition bevorzugt zusammen mit der zweiten Trittstufe an die Unterseite des Fahrzeugs herangeführt werden. Diese Bewegung kann wie oben beschrieben durch die Kulisse oder Kulissen vorgegeben werden.

Bei dem Antrieb kann es sich um einen hydraulisch oder pneumatisch betätigbaren Druckzylinder mit ausfahrbarer Kolbenstange, um eine Zahn- oder Gewindestange mit bevorzugt einem elektrischen Antrieb oder einen anderen geeigneten, handelsüblichen Antrieb handeln.

Der Antrieb kann vom Fahrer zum Beispiel mittels eines Schalters und/oder einer Fernbedienung aktiviert und deaktiviert werden. Der Schalter kann gut erreichbar am oder nahe dem Cockpit, dem Steuerrad, an einer Mittelkonsole angeordnet sein, und/oder nahe der Tür oder den Türen, unterhalb derer eine Trittstufenvorrichtung am Fahrzeug angebracht ist. Die Bedienung kann auch durch eine Fernbedienung erfolgen, was insbesondere von außen vorteilhaft ist.

Die Trittstufenvorrichtung kann eine Steuerung umfassen, mit zumindest einem Empfänger zum Empfangen von Signalen, die beispielsweise den Antrieb aktivieren und deaktivieren, und bevorzugt einem Sender, der beispielsweise ein Fehlersignal sendet, das zum Beispiel den Schalter in einen zweiten Blinkmodus versetzt, um die Fehlfunktion der Trittstufenvorrichtung dem Nutzer anzuzeigen. Ein erster Blinkmodus kann die Bewegung der Trittstufenvorrichtung anzeigen. Dabei kann eine Blinkfrequenz im ersten Blinkmodus unterschiedlich zu einer Blinkfrequenz im zweiten Blinkmodus sein. Andere Möglichkeiten der Anzeige der Bewegung und/oder der Fehlfunktion, die der Fachmann mitliest, sind vom Umfang der Erfindung mit umfasst.

Die Trittstufenvorrichtung kann weiterhin wenigstens einen Sensor, beispielsweise einen optischen Sensor, einen Geschwindigkeitsmesser, einen Drucksensor etc. umfasst, dessen Signale an die Steuerung übermittelt, dort verarbeitet und als Stellsignalen an den Antrieb weitergleitet werden. Die Sensoren beziehungsweise die von den Sensoren erfassten und von der Steuerung interpretierten Signale können beispielsweise eine Aktivierung des Antriebs nur zulassen, wenn das Fahrzeug steht, bevorzugt wenn der Antriebsmotor des Fahrzeugs ausgeschaltet ist. Bei diesem Antriebsmotor kann es sich um einen klassischen Verbrennungsmotor für Benzin, Diesel oder Gas oder einen Elektromotor handeln. Das heißt, nur bei stillstehendem Fahrzeug kann die Trittstufenvorrichtung aus der Verstauposition in die Einstiegsposition bewegt werden, und umgekehrt.

Ein Sensor kann zum Beispiel erfassen, ob die Türe im Bereich der Trittstufenvorrichtung geöffnet oder geschlossen ist. So kann ein Öffnen der Türe erst dann erlaubt werden, wenn die Trittstufenvorrichtung in der Einstiegsposition ist, bevorzugt in der Einstiegsposition verriegelt ist.

Ein Sensor, insbesondere ein optischer Sensor kann zum Beispiel verhindern, dass die Trittstufenvorrichtung aus der Verstauposition heraus bewegt wird, wenn die Gefahr besteht, dass die Trittstufenvorrichtung dabei mit einem Hindernis kollidiert. Ein Drucksensor kann eine Bewegung der Trittstufenvorrichtung stoppt, wenn eine vorgegebene Druckkraft überschritten wird. So kann verhindert werden, dass die Trittstufenvorrichtung beim Auftreffen beispielsweise auf einen Bordkantstein vor Erreichen der Einstiegsposition der zweiten Trittstufe beschädigt oder gar zerstört wird. Auch eine Verletzung eines Nutzers durch Einklemmen in der Trittvorrichtung kann verhindert werden. Die Steuerung kann aufgrund der Signale vom Sensor die Bewegung der Trittstufenvorrichtung in die Einstiegsposition/Verstauposition nur stoppen, oder die Bewegung umkehren und die Trittstufenvorrichtung automatisch in die Verstauposition/Einstiegsposition zurückführen. Der oder die Antrieb/e, wie beispielsweise Stellmotoren, für die Trittstufen können auch kraftbegrenzt sein, zum Beispiel über eine Wellenkupplung, Rutschkupplung, Überlastkupplung oder andere geeignete Bauteile, so dass auch ohne einen Drucksensor verhindert werden kann, dass die Trittstufenvorrichtung beim Auftreffen auf ein Hindernis beschädigt oder zerstört oder ein Nutzer in der Trittstufenvorrichtung eingeklemmt wird.

In einer Ausführung kann das Gehäuse der Trittstufenvorrichtung zusätzlich mit dem Fahrzeug um eine Schwenkachse, die bevorzugt im Wesentlichen quer zur Aus- und Einfahrrichtung der Trittstufenvorrichtung gerichtet ist, verschwenkbar verbunden sein. Ein Kreiselsensor kann eine Schrägstellung des Fahrzeugs erkennen, und die Steuerung einen Korrekturwert für die Trittstufenvorrichtung berechnen, um die Ausrichtung der ersten und der zweiten Trittoberfläche relativ zum Fahrzeug zur zumindest teilweisen Kompensation der Schrägstellung zu korrigieren. Alternativ können die erste Trittstufe und/oder die zweite Trittstufe schwenkbar mit dem Gehäuse verbunden sein. Für diese Verstellbewegung quer zur Linearbewegung der Trittstufenvorrichtung wenigstens ein weiterer Antrieb und/oder kann zumindest ein unabhängig vom Linearantrieb aktivierbares Getriebe vorgesehen sein kann. Die Verstellung kann auch von Hand erfolgen, wobei die Trittstufenvorrichtung dabei in mehreren vorgegebenen Winkelpositionen verrastet werden kann, beispielsweise mittels eines federbelasteten Eingriffselements, das in Öffnungen eines Lochblechs eingreift.

Um die Sicherheit der Trittstufenvorrichtung weiter zu verbessern, kann zum Beispiel im Fahrzeug oder nahe jeder Trittstufenvorrichtung eine manuell betätigbare Notstoppeinrichtung vorhanden sein, um im Falle eines Notfalls schnell reagieren zu können. Ein hörbares Signal kann ertönt, wenn die Trittstufenvorrichtung bewegt wird, zumindest wenn die Trittstufenvorrichtung aus der Verstauposition in die Einstiegsposition bewegt wird. Die vorderen Kanten der ersten Trittstufe und/oder der zweiten Trittstufe und/oder die Stirnseiten der Trittstufen quer zu der Linearbewegung von der Verstauposition in die Einstiegsposition können mit Leuchtelementen, wie Katzenaugen und/oder LED's, versehen sein, die aktiv und/oder passiv leuchten, wenn die Trittstufenvorrichtung aus der Verstauposition und/oder aus der Einstiegsposition bewegt wird. Dadurch kann bei einem Aussteigen auf der Fahrbahnseite oder neben einem Fahrradweg der nachfolgende Verkehr vor dem Hindernis gewarnt werden. Die Leuchtelemente können rot oder gelb leuchten, blinken, als Laufkette leuchten oder beliebige Farben und Leuchtbilder aufweisen.

### ZUSAMMENFASSUNG DER ZEICHNUNG

Ein Ausführungsbeispiel wird im Folgenden anhand von Figuren näher erläutert, ohne dass der Gegenstand der Anmeldung dadurch auf das gezeigte Ausführungsbeispiel eingeschränkt ist. Erfindungswesentliche Merkmale, die nur den Figuren entnommen werden können, gehören zum Umfang der Erfindung. Diese Merkmale können den Gegenstand der Anmeldung einzeln und in gezeigten Kombinationen vorteilhaft weiterbilden.

Die Figuren zeigen im Einzelnen:
- Figur 1:: Trittstufeneinrichtung an einem Fahrzeug angebaut.
- Figur 2a:: Ansicht einer Trittstufenvorrichtung in einer Einstiegsposition, in einer perspektivischen Ansicht.
- Figur 2b:: Ansicht der Trittstufenvorrichtung der Figur 2a in einer Seitenansicht.
- Figur 3:: Ansicht einer Trittstufenvorrichtung in einer Zwischenposition, in einer perspektivischen und einer Seitenansicht.
- Figur 4:: Ansicht einer Trittstufenvorrichtung in einer Verstauposition, in einer perspektivischen und einer Seitenansicht.

### BESCHREIBUNG VON BEVORZUGTEN AUSFÜRHUNGSBEISPIELEN

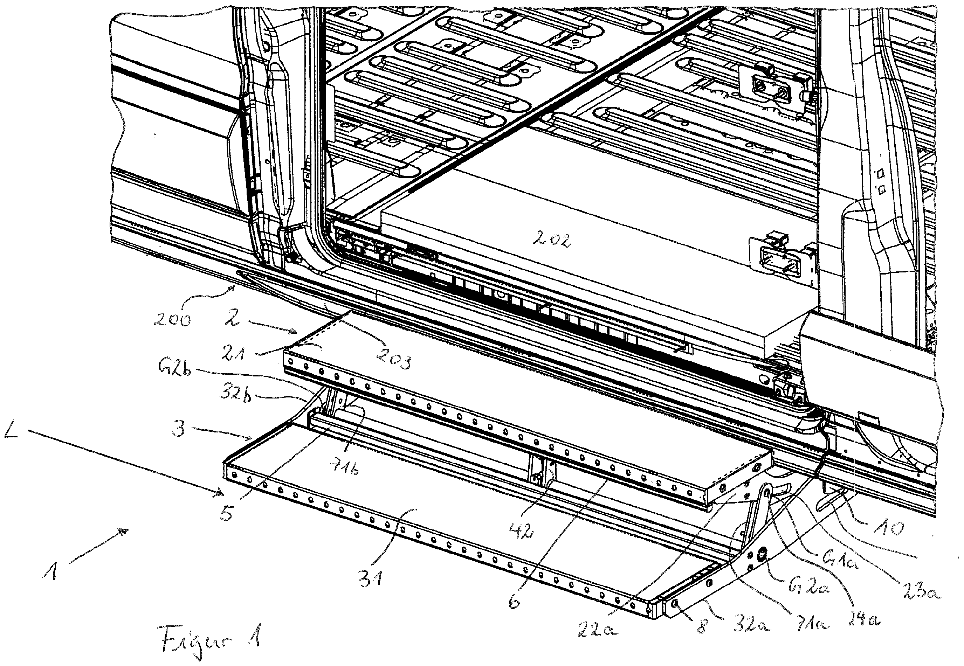

Die Figur 1 zeigt in einem Ausschnitt eine Anbausituation der Trittstufenvorrichtung 1. Die Trittstufeneinrichtung 1 ist unterhalb eines Einstiegs in ein Kraftfahrzeug angebracht, wobei es sich um einen hinteren seitlichen Einstieg handelt.

Die Trittstufenvorrichtung 1 umfasst von einer Aufstandsfläche des Kraftfahrzeugs aus betrachtet, eine erste Trittstufe 2 und eine zweite Trittstufe 3. Die erste Trittstufe 2 und die zweite Trittstufe 3 sind in der Figur 1 in einer Einstiegsposition gezeigt, das heißt, sie befinden sich in einer zweiten Endposition, in der Passagiere des Kraftfahrzeugs über die Trittstufenvorrichtung 1 in das Kraftfahrzeug ein- oder aus dem Kraftfahrzeug aussteigen können. Die beiden Trittstufen 2, 3 können in dieser Position verrastet sein, so dass die Trittstufen 2, 3 nicht ungewollt oder alleine durch die Benutzung sich relativ zueinander und relativ zu dem Kraftfahrzeug verstellen können. Dadurch können Unfälle beim Ein- und Aussteigen vermieden werden.

Die zweite Trittstufe 3 umfasst ein Trittbrett 31, einen ersten Stufenarm 32a und einen zweiten Stufenarm 32b. Die zweite Trittstufe 3 ist mit beiden Stufenarmen 32a, 32b fest verbunden, so dass sich die zweite Trittstufe 3 relativ zu den Stufenarmen 32a, 32b weder linear bewegen noch relativ zu diesen verschwenkt werden kann. Die beiden Stufenarme 32a, 32b sind über eine Verstärkungsrippe 5 miteinander verbunden, wobei die Verstärkungsrippe 5 zwischen dem zweiten Trittbrett 3 und einer Verbindungswelle 41, die über ein Verbindungselement 42 die zweite Trittstufe 3 mit einem in der Figur 1 nicht dargestellten Antrieb 4 in zwei Drehgelenken G2a und G2b verbindet. Die Drehgelenke G2a, G2b werden durch Bohrungen in den Stufenarmen 32a, 32b gebildet, die im Ausführungsbeispiel von den Enden der Verbindungswelle 41 durchgriffen werden und mit Sprengringen gesichert sind. Das Verbindungselement 42 zum Antrieb 4 ist in Richtung der Längsachse L des Kraftfahrzeugausschnitts mittig zu der zweiten Trittstufe 3 angeordnet, so dass es bei der Bewegung der zweiten Trittstufe 3 zu keinem Verkanten oder Verklemmen der Trittstufenanordnung 1 kommen kann.

Im Vordergrund, das heißt, beim Blick auf die Figur 1, ist unmittelbar neben dem Stufenarm 32a eine Wand des Gehäuses 10 zu sehen. Das Gehäuse 10 wird in den folgenden Figuren noch genauer beschrieben werden.

Die erste Trittstufe 2 umfasst ein Trittbrett 21, einen ersten Stufenarm 22a und einen zweiten Stufenarm 22b. Die erste Trittstufe 2 ist mit beiden Stufenarmen 22a, 22b fest verbunden, so dass sich die zweite Trittstufe 2 relativ zu den Stufenarmen 22a, 22b weder linear bewegen noch relativ zu diesen verschwenkt werden kann. In den Stufenarmen 22a, 22b ist einen Langlochbohrung 23a, 23b gebildet, die eine Kulissenführung für einen Verbindungselement 71a, 71b einer Mechanik 7 bildet. Die Langlochbohrung 23a, 23b bildet zusammen mit dem Verbindungselement 71a, 71b ein zweites Schwenkgelenk G1a, G1b.

Die erste Trittstufe 2 und die zweite Trittstufe 3 sind über die Mechanik 7 miteinander verbunden. Die Mechanik 7 umfasst das erste Drehgelenk G1a, G2a, das Verbindungselement 71a, 71b, das zweite Schwenkgelenk G2a, G2b und das Verbindungselement 42, das direkt oder über weitere Bauteile mit dem Antrieb 4 verbunden ist.

Die Stufenarme 22a, 22b und die Stufenarme 32a, 32b können offenen an den Seiten, das heißt, den von dem Trittbrett 21, 31 abgewandten Außenseiten die nicht zum Fahrzeug zeigen, aktive oder passive Leuchtelement 8 aufweisen, um andere Verkehrsteilnehmer zu warnen, wenn die Trittstufenvorrichtung 1 in der Einstiegposition ist, in diese oder aus dieser heraus bewegt wird. Bei den aktiven Leuchtelementen 8 kann es sich beispielsweise um LEDs handeln, bei den passiven Leuchtelementen 8 beispielsweise um Katzenaugen. Zusätzlich kann ein Warnton ertönen, wenn die Trittstufenvorrichtung 1 bewegt wird.

Die Trittstufenvorrichtung 1 kann wenigstens einen Sensor umfassen, wie einen Drucksensor, einen optischen Sensor, einen Kreisel- oder Gyrosensor oder einen anderen Sensor, der die Bewegungen der ersten Trittstufe 2 und/oder der zweiten Trittstufe 3 überwacht, der eine Schräglage des Kraftfahrzeugs detektiert oder der Hindernisse erkennt, die ein gefahrloses insbesondere Ausfahren der Trittstufenvorrichtung 1 nicht zulassen. Der Sensor kann die Bewegung der Trittstufenvorrichtung 1 zum Beispiel in die Einstiegsposition unterbinden oder abbrechen.

Der optische Sensor kann zum Beispiel erkennen, wenn ein Hindernis, wie ein Bordkantstein oder ähnliches, die Bewegung der zweiten Trittstufe 3 in die gezeigte Einstiegsposition behindert. Um zu verhindern, dass die Trittstufenvorrichtung 1 beschädigt wird, kann eine Bewegung der Trittstufenvorrichtung 1 unterbunden oder gestoppt werden. Gleiches kann durch einen Drucksensor erreicht werden, der zusätzlich auch erkennt, wenn beispielsweise der Fuß eines Nutzers zwischen der ersten Trittstufe 2 und der zweiten Trittstufe 3 klemmt. Der Drucksensor kann beim Erreichen oder Überschreiten eines vorgegebenen Druckgrenzwertes bei der Bewegung der Trittstufenvorrichtung 1 die Bewegung nur stoppen oder stoppen und umkehren. Der Gyrosensor kann erkennen, wenn das Kraftfahrzeug beispielsweise an einem Hang oder quer zum Hang steht, wenn die Trittstufenvorrichtung benutzt werden soll. Dies kann dem Fahrer oder den Fahrgästen als Warnsignale mitgeteilt werden, da ein Abstand von der zweiten Trittstufe 3 zum Untergrund dadurch größer oder kleiner sein kann, als der erwartete Abstand.

Die Trittstufenvorrichtung 1 kann am Kraftfahrzeug so befestigt sein, dass über zusätzliche Antriebsvorrichtungen die Trittstufenvorrichtung 1, respektive deren Winkelstellung zum Kraftfahrzeug, in die Fahrtrichtung und quer dazu verstellt werden kann, um die Position des Kraftfahrzeugs, das heißt die Schrägstellung, zumindest teilweise zu kompensieren.

Die Trittstufenvorrichtung 1 kann zum Beispiel vom Fahrer bedient werden, zum Beispiel über ein Bedienelement am Lenkrad, am Cockpit oder an der Mittelkonsole. Die Bedienung kann die Funktionen Ausfahren, Einfahren und Notstopp umfassen. Ein Bedienungselement, hier insbesondere die Notstoppfunktion, kann auch an oder nahe der Tür angeordnet sein, der die Trittbrettvorrichtung 1 zugeordnet ist. Die Trittstufenvorrichtung 1 kann alternativ oder zusätzlich über eine Fernbedienung bedient werden, insbesondere zum Einsteigen, wenn der Nutzer sich dem Kraftfahrzeug nähert. Eine Funktion der Trittstufenvorrichtung 1 kann bevorzugt nur bei stehendem Fahrzeug, besonders bevorzugt nur bei angeschaltetem Fahrzeugmotor möglich sein. Auch ein Öffnen der Tür kann solange gesperrt sein, bis die Trittstufenvorrichtung 1 vollständig in der gezeigten Einstiegsposition ist.

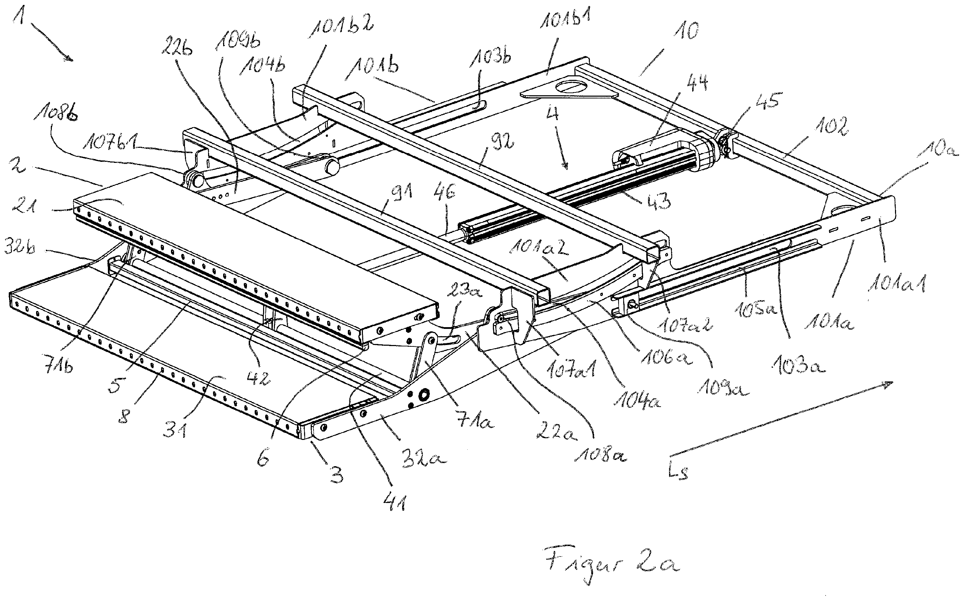

Die Figur 2a zeigt die Trittstufenvorrichtung 1 losgelöst vom Kraftfahrzeug in der Einstiegsposition, das heißt, in der Position, in der die Trittstufenvorrichtung 1 vollständig ausgefahren ist, die erste Trittstufe 2 und die zweite Trittstufe 3 neben dem Kraftfahrzeug unterhalb einer Seitentür oder einer Hecktür liegen, so dass die Trittstufenvorrichtung 1 zum Einsteigen eines Nutzers in das Kraftfahrzeug und zum Aussteigen des Nutzers aus dem Kraftfahrzeug bereit ist.

In der perspektivischen Draufsicht sind alle Einzelteile eines Ausführungsbeispiels einer Trittstufenvorrichtung 1 zu sehen. Die Trittstufenvorrichtung 1 des Ausführungsbeispiels ist vorgesehen, um mit einem Kraftfahrzeug, wie beispielsweise einem Van, einem Minivan oder einem SUV, verbunden zu werden. Zum Verbinden mit einem Unterboden 200 des Kraftfahrzeugs umfasst die Trittstufenvorrichtung 1 zwei Hohlprofile 91, 92. Die Hohlprofile 91, 92 können mit dem Unterboden 200 des Kraftfahrzeugs gefügt, beispielsweise verschraubt oder verschweißt, werden und tragen die beweglichen und unbeweglichen Teile der Trittstufenvorrichtung 1. Die beiden Hohlprofile 91, 92 bilden zusammen eine Halterung 9 für die Trittstufenvorrichtung 1.

Mit der Halterung 9 ist ein Gehäuse 10, das im Ausführungsbeispiel durch einen Rahmen 10 gebildet ist, verbunden, der zwei Seitenteile 101a, 101b umfasst und eine Querstrebe 102 und Versteifungselemente. Die Querstrebe 102 verbindet die beiden Seitenteile 101a, 101b an einem ersten freien Ende. Dort sind im gezeigten Ausführungsbeispiel auch die Versteifungselemente angeordnet, bei denen es sich im Dreiecke aus zum Beispiel Blech handelt, die gewichtsreduziert gebaut und mit der Querstrebe 102 und den beiden Seitenteilen 101a, 101b gefügt sind.

Die Seitenteile 101a, 101b haben einen ersten Abschnitt 101a1, 101b1 der an der Querstrebe 102 beginnt und im Wesentliche die Form einer Flachstange mit sich nicht ändernden Abmaßen hat. An diesen ersten Abschnitt 101a1, 101b1 schließt sich ein zweiter Abschnitt 101a2, 101b2 an, dessen Form von der Form der Flachstange abweicht. Eine Höhe des zweiten Abschnitts 101a2, 101b2 ist größer, bevorzugt wenigstens doppelt so groß, wie die Höhe des ersten Abschnitts 101a1, 101b1, wobei die Höhe bei der am Kraftfahrzeug montierten Trittbrettvorrichtung 1 im Wesentlichen senkrecht zur Ebene des Unterbodens 200 des Kraftfahrzeugs weist. Die dem Unterboden 200 zugewandte Oberseite des zweiten Abschnitts 101a2, 101b2 ist hergerichtet, um mit der Halterung 9, respektive den beiden Hohlprofilen 91, 92 verbunden zu werden. Das zweite freie Ende der Seitenteile 101a, 101b, das von dem Querholm 102 angewandt ist, ist stufenartig ausgebildet, im Ausführungsbeispiel mit zwei Stufen. Die der Oberseite abgewandte Unterseite des zweiten Abschnitts 101a2, 101b2 verläuft schräg oder bogenförmig relativ zur Oberseite, die Schräge, respektive der Bogen, geht in eine Gerade über, die in einer Verlängerung die Unterseite des ersten Abschnitts 101a1, 101b1 bildet.

Jedes der Seitenteile 101a, 101b umfasst zwei Öffnungen 103a, 103b, 104a, 104b, wobei im Ausführungsbeispiel die erste Öffnung 103a, 103b ein im Wesentlichen gerades Langloch ist, die sich vom ersten Abschnitt 101a1, 101b1 in den zweiten Abschnitt 101a2, 101b2 erstreckt und im Beispiel zu einem größeren Teil im ersten Abschnitt 101a1, 101b1 und zu einem kleineren Teil im zweiten Abschnitt 101a2, 101b2 gebildet ist. Die zweite Öffnung 104a, 104b ist im Ausführungsbeispiel ein im weitesten Sinne S-förmige Langloch und erstreckt sich in eine Längsrichtung L_{S} der Seitenteile 101a, 101b über eine Länge, die im Wesentlichen der Länge des zweiten Abschnitts 101a2, 101b2 entspricht.

Neben den Öffnungen 103a, 103b ist eine Führungsschiene 105a, 105b mit dem Seitenteil 101a, 101b gefügt, neben den Öffnungen 104a, 104b finden sich entsprechende Führungselemente 106a, 106b, die über Verbindungsklammern 107a1, 107a2, 107b1, 107b2, die mit der Halterung 9 gefügt sind, mit den Seitenteilen 101a, 101b verbunden sind.

Mit der Querstrebe 102 ist eine Antrieb 4 verbunden, bevorzugt in einer schwimmenden Lagerung 45, so dass der Antrieb 4 in der Lagerung in jede Richtung quer zur Bewegungsrichtung des Antriebs 4 beweglich gelagert ist. Bei dem Antrieb 4 handelt es sich um einen Pneumatik- oder Hydraulikzylinder, mit einem Kolben, der im Zylinder 43 linear bewegt werden kann. Der Kolben ist mit einer Kolbenstange 46 verbunden. Der Antrieb 4 umfasst eine Pumpenanordnung 44, mit der das Gas oder das Fluid im Zylinder 43 alternativ vor und hinter den Kolben gefördert werden kann, so dass der Kolben die Kolbenstange 46 linear in eine erste Richtung aus dem Zylinder 43 heraus und linear in eine zweite Richtung, die der ersten Richtung entgegengesetzt ist, bewegen kann.

Die Trittstufenvorrichtung 1 umfasst weiterhin eine erste Trittstufe 2 und eine zweite Trittstufe 3, wie sie bereits aus der Figur 1 bekannt sind. Die erste Trittstufe 2 und die zweite Trittstufe 3 sind in einer Einstiegsposition, das heißt, sie befinden sich in einer Endposition, in der Passagiere des Kraftfahrzeugs über die Trittstufenvorrichtung 1 in das Kraftfahrzeug ein- oder aus dem Kraftfahrzeug aussteigen können. Die beiden Trittstufen 2, 3 können in dieser Position verrastet sein, so dass sich die Trittstufen 2, 3 nicht ungewollt oder alleine durch die Benutzung relativ zueinander und relativ zu dem Kraftfahrzeug verstellen können. Dadurch können Unfälle beim Ein- und Aussteigen vermieden werden.

Die erste Trittstufe 2 umfasst ein Trittbrett 21, einen ersten Stufenarm 22a und einen zweiten Stufenarm 22b. Die erste Trittstufe 2 ist mit beiden Stufenarmen 22a, 22b fest verbunden, so dass sich die erste Trittstufe 2 relativ zu den Stufenarmen 22a, 22b weder linear bewegen noch relativ zu diesen verschwenkt werden kann. In den Stufenarmen 22a, 22b ist einen Langlochbohrung 23a, 23b gebildet, die eine Kulissenführung für ein Verbindungselement 71a, 71b einer Mechanik 7 bildet. Die Langlochbohrung 23a, 23b bilden zusammen mit dem Verbindungselement 71a, 71b ein zweites Schwenkgelenk G1a, G1b.

Die zweite Trittstufe 3 umfasst ein zweites Trittbrett 31, einen ersten Stufenarm 32a und einen zweiten Stufenarm 32b. Die zweite Trittstufe 3 ist mit beiden Stufenarmen 32a, 32b fest verbunden, so dass sich die zweite Trittstufe 3 relativ zu den Stufenarmen 32a, 32b weder linear bewegen noch relativ zu diesen verschwenkt werden kann. Die beiden Stufenarme 32a, 32b sind über eine Verstärkungsrippe 5 miteinander verbunden, wobei die Verstärkungsrippe 5 zwischen dem zweiten Trittbrett 3 und einer Verbindungswelle 41, die über ein Verbindungselement 42 die zweite Trittstufe 3 mit dem Antrieb 4 in zwei Drehgelenken G2a und G2b verbindet.

Die erste Trittstufe 2 und die zweite Trittstufe 3 sind über die Mechanik 7 miteinander verbunden. Die Mechanik 7 umfasst das erste Drehgelenk G1a, G2a, das zweite Schwenkgelenk G2a, G2b und das Verbindungselement 71a, 71b, das direkt oder über weitere Bauteile mit dem Antrieb 4 verbunden ist. Das Verbindungselement 71a, 71b kann zwei Verbindungszapfen umfassen, von denen einer in eine Öffnung im zweiten Stufenarm 32a, 32b eingreift, um das zweite Schwenkgelenk G2a, G2b zu bilden. Der zweite Verbindungszapfen greift in das Langloch 23a, 23b im ersten Stufenarm 22a, 22b ein und ist dort verliersicher gehalten. Der zweite Verbindungszapfen und das Langloch 23a, 23b bilden das erste Drehgelenk G1a, G1b, das entlang des Langlochs 23a, 23b verschoben werden kann. Das Verbindungselement 71, 71b kann alternativ aus zwei Stangen gebildet sein, die jeweils an einer Außenseite des Stufenarms 22a, 22b, 32a, 32b anliegen und mittels eines Bolzens, der das jeweilige Langloch 23a, 23b durchgreift, verbunden sind.

Die Figur 2a zeigt die Position der Trittstufenvorrichtung 1 in der Einstiegsposition relativ zu einem Kraftfahrzeug in einer Seitenansicht. Die Halterung 91, 92 liegt am Fahrzeugunterboden 200 an, respektive ist mit diesem verbunden. Die erste Trittstufe 2 ist in der Einstiegsposition, ebenso wie die zweite Trittstufe 3. Die zweite Trittstufe 3 liegt näher an der Fahrbahn 201, die erste Trittstufe 2 liegt oberhalb der zweiten Trittstufe 3 und näher am Fahrzeug beziehungsweise einem Fahrzeugeschweller 203, als die zweite Trittstufe 3. Ein vertikaler Abstand A1 von der Fahrbahn 201 bis zum Trittbrett 31 der zweiten Trittstufe 3 ist im Wesentlichen so groß, wie der vertikale Abstand A2 zwischen dem zweiten Trittbrett 31 und dem ersten Trittbrett 21, und so groß wie der Abstand A3 zwischen dem ersten Trittbrett 21 und dem Innenboden 202 des Fahrzeugs. Der Abstand beträgt ca. 20 cm, wenn das Fahrzeug auf einer Ebene steht. Aufgrund von Fahrzeugkonfiguration und Reifengröße kann der Abstand A1 von der Fahrbahn 201 zum zweiten Trittbrett 31 auch unterschiedlich sein. Bevorzugt liegen die Abstände A2 und A3 immer in dem genannten Bereich. Das erste Trittbrett 21 liegt nahe am dem Fahrzeugschweller 203 und im Ausführungsbeispiel in etwa in der Höhe des Fahrzeugunterbodens 200.

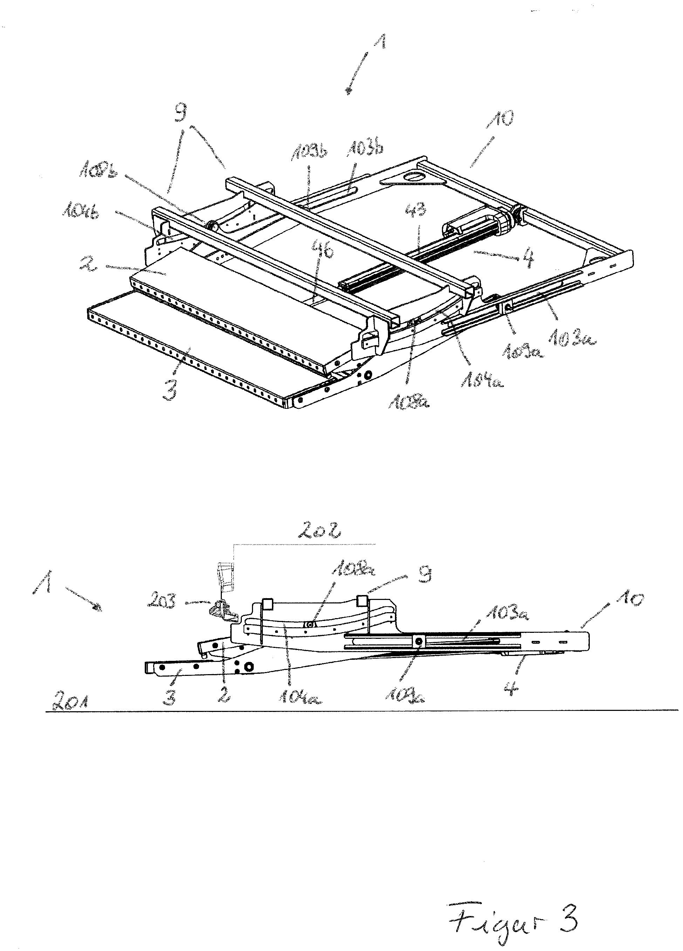

Die Figur 3 zeigt die Trittstufenvorrichtung 1 der vorhergehenden Figuren in einer Zwischenposition, in der sie halb ein- oder halb ausgefahren ist. Die erste Trittstufe 2 und die zweite Trittstufe 3 liegen jetzt unterhalb des Fahrzeugschwellers 203, die erste Trittstufe 2 und die zweite Trittstufe 3 wurden vom Antrieb 4 gemeinsam in Richtung unter den Fahrzeugboden 200 bewegt. Bei dieser Bewegung wurde die erste Trittstufe 2 auf die zweite Trittstufe 3 zubewegt oder abgesenkt, die erste Trittstufe 2 und die zweite Trittstufe 3 wurden linear zurückbewegt und dabei bevorzugt in Richtung von der Fahrbahn 201 weg, auf den Unterboden 200 des Fahrzeugs zu bewegt.

Die Kolbenstange 46 ist jetzt in den Zylinder 43 teilweise eingefahren. Die ersten Stufenarme 22a, 22b umfassen an einem Ende, das sich bis in den Rahmen 10a erstreckt, Führungsstifte 108a, 108b oder Führungsrollen, die in das Langloch 104a, 104b eingreifen und dort verliersicher gehalten werden. Die Führungsstifte 108a, 108b werden durch die lineare Bewegung des Antriebs 4 entlang der Innenkonturen des Langlochs 104a, 104b bewegt und übertragen diese Bewegung auf die erste Trittstufe 2. Die zweiten Stufenarme 32a, 32b umfassen an einem Ende, das sich in den Rahmen 10a hinein erstreckt, Führungsstifte 109a, 109b oder Führungsrollen, die in das Langloch 103a, 103b eingreifen und dort verliersicher gehalten sind. Die Führungsstifte 109a, 109b werden durch die lineare Bewegung des Antriebs 4 entlang der Innenkontur des Langlochs 103a, 103 b geführt, im Ausführungsbeispiel entlang einer Geraden.

In der Zwischenposition der Figur 3 liegen die Führungsstifte 108a, 108b für die erste Trittstufe 2 und die Führungsstifte 109a, 109b für die zweite Trittstufe 3 in dem jeweiligen Langloch 104a, 104b, 103a, 103b ungefähr in der Mitte.

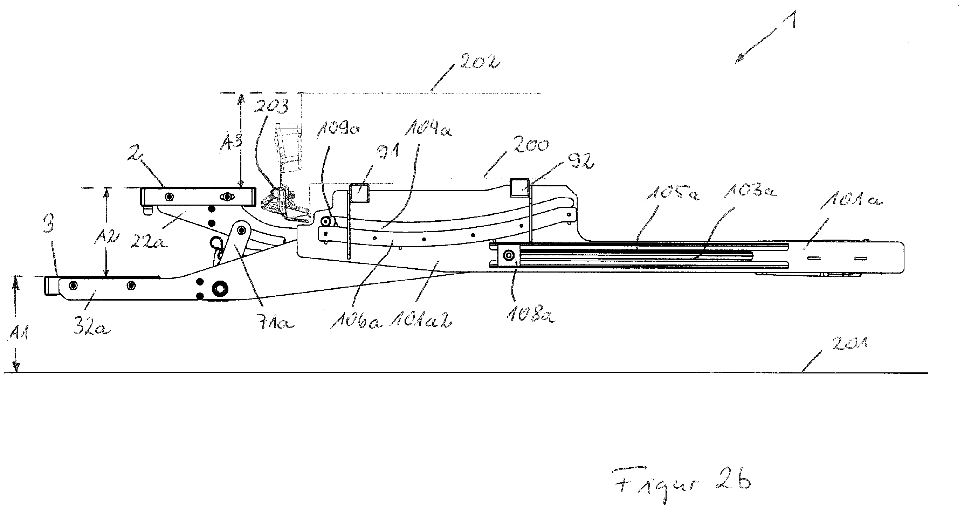

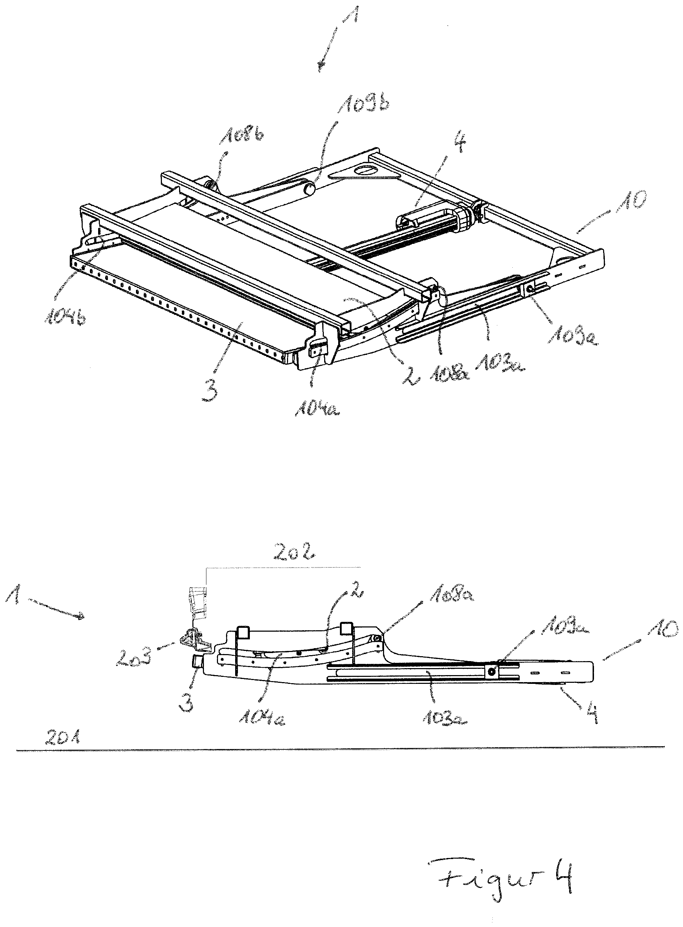

Die Figur 4 zeigt die Trittstufenvorrichtung 1 in der Verstauposition, in der die Trittstufenvorrichtung 1 vollständig unterhalb des Fahrzeugs liegt. Bei der Bewegung der Trittstufenvorrichtung 1 aus der Zwischenposition der Figur 3 in die Verstauposition, wurden die Trittstufen 2, 3 weiter in Richtung des Unterbodens 200 des Fahrzeugs bewegt, so dass die erste Trittstufe 2 jetzt direkt unterhalb des Unterbodens 200 liegt oder an diesem anliegt. Um in diese Position zu gelangen, muss die erste Trittstufe 2 ausgehend von der Figur 2 zunächst nach unten in Richtung Fahrbahn 201 bewegt werden, und nach dem Passieren des Fahrzeugschwellers 203 in die Gegenrichtung, damit die erste Trittstufe 2 in die gezeigte Verstauposition gelangt. Diese Bewegung wird durch die Führung der ersten Trittstufe 2, respektive der Führungsstifte 108a, 108b in den Langlöchern 104a, 104b veranlasst, welche aufgrund ihrer Form die erste Bewegung der ersten Trittstufe 2 nach unten, das Durchtauchen unter dem Fahrzeugschweller 203 und zum Schluss die Bewegung der ersten Trittstufe 3 nach oben Richtung Unterboden 200 bewirkt. Die Führungsstifte 108a, 108b, 109a, 109b liegen jetzt an einem von den Trittbrettern 21, 31 abgewandten Ende der Langlöcher 103a, 103b respektive 104a, 104b an, die eine Endposition der Trittstufenvorrichtung 1 in der Verstauposition definieren. In der Verstauposition, wie in der Einstiegsposition der Figur 2 können die Trittstufen 2, 3 verriegelt sein, um eine ungewolltes Lösen aus der jeweiligen Endposition zu verhindern.

### Bezugszeichenliste

- 1: Trittbrettvorrichtung
- 2: Trittstufe
- 3: Trittstufe
- 4: Antrieb
- 5: Verstärkungsrippe
- 6: Sensor
- 7: Mechanik
- 8: Leuchtelement
- 9: Halterung

- 10: Gehäuse
- 10a: Rahmen
- 21: Trittbrett
- 22a: Stufenarm
- 22b: Stufenarm
- 23a: Langloch
- 23b: Langloch
- 31: Trittbrett
- 32a: Stufenarm
- 32b: Stufenarm
- 41: Verbindungswelle
- 42: Verbindungselement
- 43: Zylinder
- 44: Pumpenanordnung
- 45: Lager
- 46: Kolbenstange
- 71a: Verbindungselement
- 71b: Verbindungselement
- 91: Hohlprofil
- 92: Hohlprofil
- 101a: Seitenteil
- 101b: Seitenteil
- 102: Querstrebe
- 101a1: Abschnitt
- 101a2: Abschnitt
- 101b1: Abschnitt
- 101b2: Abschnitt
- 103a: Öffnung
- 103b: Öffnung
- 104a: Öffnung
- 104b: Öffnung
- 105a: Führungsschiene
- 105b: Führungsschiene
- 106a: Führungselement
- 106b: Führungselement
- 107a1: Verbindungsklammer
- 107a2: Verbindungsklammer
- 107b1: Verbindungsklammer
- 107b2: Verbindungsklammer
- 108a: Eingriffselement
- 108b: Eingriffselement
- 109a: Verbindungselement
- 109b: Verbindungselement

- 200: Unterboden
- 201: Fahrbahn
- 202: Innenboden
- 203: Schweller

- G1a: Gelenk
- G1b: Gelenk
- G2a: Gelenk
- G2b: Gelenk
- L: Längsrichtung Fahrzeug
- L_{S}: Längsrichtung Seitenteile

## Patentansprüche

1. Trittstufenvorrichtung, die mit einem Fahrzeug verbindbar oder verbunden ist,
mit mindestens zwei Trittstufen (2, 3),
mit einem Gehäuse (10), das eine Verbindungsschnittstelle aufweist, über welche das Gehäuse (10) mit einem Teil eines Unterbaus des Fahrzeugs verbindbar oder verbunden ist,
mit einen Antrieb (4), der derart ausgebildet und bezogen auf die Trittstufen (2, 3) derart angeordnet ist,
- um mindestens eine der Trittstufen (2, 3) aus einer Verstauposition, in der die Trittstufen (2, 3) vollständig unterhalb des Fahrzeuges in oder an dem Gehäuse (10) angeordnet sind, in eine Einstiegsposition seitlich neben oder hinter dem Fahrzeug zu bewegen,
- eine erste Trittstufe (2) bei der Bewegung aus der Verstauposition in die Einstiegsposition in eine Richtung in oder quer zu einer Fahrtrichtung des Fahrzeugs und in Richtung einer Fahrgastzelle des Fahrzeugs nach oben zu bewegen und
- wenigstens eine zweite Trittstufe (3) in oder quer zu der Fahrtrichtung des Fahrzeugs und in Richtung einer Fahrbahn nach unten zu bewegen;
wobei die Bewegung der wenigstens einen zweiten Trittstufe (3) eine rein lineare Bewegung ist, wobei die Bewegung der ersten Trittstufe (2) in Richtung der Fahrgastzelle erst beginnt, wenn die wenigstens eine zweite Trittstufe (3) in einer Zwischenposition ist,
wobei das Gehäuse (10) eine erste Öffnung (103a, 103b) als Führungsnut oder erste Kulisse umfasst, die eine Bewegung der ersten Trittstufe (2) und eine Bewegung der wenigstens einen zweiten Trittstufe (3) aus der Verstauposition in eine Zwischenposition und eine Bewegung der zweiten Trittstufe (3) von der Zwischenposition in die Einstiegsposition steuert, und
wobei die wenigstens eine zweite Trittstufe (3) ein Eingriffselement (109a, 109b) umfasst, das in die erste Öffnung (103a, 103b) im Gehäuse (10) eingreift und in der Zwischenposition ungefähr in der Mitte der ersten Öffnung (103a, 103b) liegt.

2. Trittstufenvorrichtung nach Anspruch 1,
wobei sich eine Position der ersten Trittstufe (2) relativ zur zweiten Trittstufe (3) auf dem Weg von der Verstauposition in die Zwischenposition nicht ändert, und/oder
wobei die erste Trittstufe (2) und die wenigstens eine zweite Trittstufe (3) in der Verstauposition und/oder in der Einstiegsposition verriegelt sind.

3. Trittstufenvorrichtung nach einem der vorhergehenden Ansprüche, wobei die erste Trittstufe (2) mit der wenigstens einen zweiten Trittstufe (3) über eine Mechanik (7) gekoppelt sind, welche insbesondere ein Verbindungselement (71) umfasst, das mit der ersten Trittstufe (2) in einem ersten Drehgelenk (G1a, G2a) und mit der wenigsten einen zweiten Trittstufe (3) in einem zweiten Drehgelenk (G1b, G2b) verbunden ist.

4. Trittstufenvorrichtung nach einem der vorhergehenden Ansprüche,
wobei das Eingriffselement (109a, 109b) bevorzugt fest mit der wenigstens einen zweiten Trittstufe (3) verbunden oder mit der wenigstens einen zweiten Trittstufe (3) in einem Stück gebildet ist; und/oder
wobei die erste Öffnung (103a, 103b) in dem Gehäuse (10) einen Anschlag für das Eingriffselement (109a, 109b) in der Einstiegsposition und/oder der Verstauposition der wenigstens eine zweiten Trittstufe (3) bildet, und/oder wobei das Gehäuse (10) eine zweite Öffnung (104a, 104b) als Führungsnut oder zweite Kulisse umfasst, die die Bewegung der ersten Trittstufe (2) aus der Verstauposition in die Einstiegsposition steuert.

5. Trittstufenvorrichtung nach einem der vorhergehenden Ansprüche,
wobei die erste Trittstufe (2) ein Eingriffselement (108a, 108b) umfasst, das in die zweite Öffnung (104a, 104b) im Gehäuse (10) eingreift, wobei das Eingriffselement (108a, 108b) bevorzugt fest mit der ersten Trittstufe (2) verbunden oder mit ersten Trittstufe (2) in einem Stück gebildet ist; und/oder wobei die zweite Öffnung (104a, 104b) in dem Gehäuse (10) einen Anschlag für das Eingriffselement (108a, 108b) in der Einstiegsposition und/oder der Verstauposition der ersten Trittstufe (2) bildet; und/oder
wobei das Gehäuse (10) einen Rahmen (10a) umfasst, der ein erstes Seitenteil (101a), ein zweites Seitenteil (101b) und eine Querstrebe (102) umfasst, und eine erste Öffnung (103a, 103b) und eine zweite Öffnung (104a, 104b) im dem ersten Seitenteil (101a) und dem zweiten Seitenteil (101b) ausgebildet sind.

6. Trittstufenvorrichtung nach einem der vorhergehenden Ansprüche,
wobei zumindest ein Drehgelenk (G1a, G1b; G2a, G2b) eine in einem Stufenarm (21a, 31b, 21b, 31b) gebildetes Langloch (33a, 33b), in der ein Eingriffselement (24a, 24b) verschwenkbar und linear verschiebbar ist, umfassen; und/oder
wobei das Verbindungselement (71) die erste Trittstufe (2) in der Einstiegsposition auf der zweiten Trittstufe (3) abstützt und bevorzugt in der Einstiegsposition verriegelt.

7. Trittstufenvorrichtung nach einem der vorhergehenden Ansprüche, wobei die erste Trittstufe (2) bei der Bewegung aus der Verstauposition relativ zum Fahrzeug in Richtung des Fahrgastraums nach oben und in Richtung an das Fahrzeug herab bewegt wird, um einen Spalt zwischen einer dem Fahrzeug zugewandten Seite der ersten Trittstufe (2) und einer Fahrzeugaußenhaut oder einem Fahrzeugschweller (203) gering zu halten.

8. Trittstufenvorrichtung nach einem der vorhergehenden Ansprüche,
wobei eine Trittoberfläche (21) der ersten Trittstufe (2) in der Verstauposition schräg zu einer Trittoberfläche (31) der wenigstens eine zweiten Trittstufe (3), bevorzugt in Richtung auf die Trittoberfläche (31) der wenigstens einen zweiten Trittstufe (3) zu geneigt, angeordnet ist und/oder
wobei eine Trittoberfläche (21) der ersten Trittstufe (2) und eine Trittoberfläche (31) der wenigstens einen zweiten Trittstufe (3) in der Einstiegsposition in verschiedenen Ebenen und im Wesentlichen parallel zueinander verlaufen.

9. Trittstufenvorrichtung nach einem der vorhergehenden Ansprüche,
wobei die erste Trittstufe (2) und die wenigstens eine zweite Trittstufe (3) in Fahrtrichtung des Fahrzeugs oder quer dazu versetzt zueinander angeordnet sind und sich bevorzugt teilweise überlappen und/oder
wobei zumindest die erste Trittstufe (2) in der Verstauposition hinter einer nach unten vorstehenden Fahrzeugkante, beispielsweise einem Fahrzeugschweller (203) liegt, und die erste Trittstufe (2) bei der Bewegung in die Verstauposition unter der Fahrzeugkante durch taucht.

10. Trittstufenvorrichtung nach einem der vorhergehenden Ansprüche, wobei ein vertikaler Abstand (A3) zwischen einem Innenboden (202) des Fahrzeugs und einem ersten Trittbrett (21) der ersten Trittstufe (2), ein vertikaler Abstand (A2) zwischen dem ersten Trittbrett (21) und einem zweiten Trittbrett (31) der wenigstens einen zweiten Trittstufe (3) und, bei auf einer flachen Ebene stehendem Fahrzeug, ein vertikaler Abstand (A1) zwischen der Fahrbahn (201) und dem zweiten Trittbrett (31) im Wesentlichen gleich ist.

11. Trittstufenvorrichtung nach einem der vorhergehenden Ansprüche,
wobei der Antrieb (4) ein hydraulisch oder pneumatisch betätigbarer Druckzylinder (43) mit ausfahrbarer Kolbenstange (46) oder eine Gewindestange mit einem elektrischen Antrieb und/oder
wobei der Antrieb (4) mittels eines Schalters und/oder einer Fernbedienung, insbesondere am Cockpit, am Lenkrad, an der Mittelkonsole oder an der Tür, aktiviert und deaktiviert werden kann;
wobei der Antrieb (4) derart ausgebildet ist, dass er nur bei stehendem Fahrzeug aktivierbar ist, um die Trittstufenvorrichtung (1) aus der Verstauposition in die Einstiegsposition zu bewegen.

12. Trittstufenvorrichtung nach einem der vorhergehenden Ansprüche, wobei die Trittstufenvorrichtung (1) ferner eine Steuerung umfasst und wobei die Trittstufenanordnung (1) wenigstens einen Sensor (6), insbesondere einen optischen Sensor, Geschwindigkeitsmesser, Drucksensor und/oder Kreiselsensor, umfasst, der mit der Steuerung gekoppelt ist, um die von dem Sensor ermittelten Signale an die Steuerung zu übermitteln, dort zu verarbeiten und als Stellsignale an den Antrieb (4) weiterzuleiten.

13. Trittstufenvorrichtung nach einem der vorhergehenden Ansprüche,
wobei der optische Sensor verhindert, dass die Trittstufenvorrichtung (1) aus der Verstauposition heraus bewegt wird, wenn die Gefahr besteht, dass die Trittstufenvorrichtung (1) dabei mit einem Hindernis kollidiert und/oder wobei der Drucksensor eine Bewegung der Trittstufenvorrichtung (1) stoppt, wenn eine vorgegebene Druckkraft überschritten wird.

14. Trittstufenvorrichtung nach einem der vorhergehenden Ansprüche, wobei zumindest eine Trittstufe (2, 3) um eine Schwenkachse, die parallel zu einer Längsachse (L) des Fahrzeugs gerichtet ist, verschwenkbar verbunden ist.

15. Trittstufenvorrichtung nach einem der vorhergehenden Ansprüche,
wobei ein Kreiselsensor vorgesehen ist, der dazu ausgebildet ist, eine Schrägstellung des Fahrzeugs zu erkennen, wobei die Steuerung einen Korrekturwert für die Trittstufenvorrichtung (1) berechnet, um die Ausrichtung des ersten und zweiten Trittbretts (21, 31) relativ zum Fahrzeug zur zumindest teilweisen Kompensation der Schrägstellung zu korrigieren, und/oder
wobei die vom Fahrzeug weg weisenden vorderen Kanten der Trittstufen (2, 3) und/oder die freien Stirnseiten der Trittstufen (2, 3) mit Leuchtelementen (8) versehen sind, die leuchten, wenn die Trittstufenvorrichtung (1) in der Einstiegsposition befindlich ist und/oder aus der Verstauposition und/oder aus der Einstiegsposition bewegt wird.

## Claims

1. Step device which can be connected or is connected to a vehicle,
comprising at least two steps (2, 3),
comprising a housing (10) which has a connection interface, via which the housing (10) can be connected or is connected to a part of a substructure of the vehicle,
comprising a drive (4) which is configured and arranged in relation to the steps (2, 3) in order to
- move at least one of the steps (2, 3) from a stowed position, in which the steps (2, 3) are arranged completely below the vehicle in or on the housing (10), to a boarding position laterally next to or behind the vehicle,
- move a first step (2), during the movement from the stowed position to the boarding position, upwards in a direction in or transverse to a direction of travel of the vehicle and in the direction of a passenger compartment of the vehicle, and
- move at least one second step (3) downwards in or transverse to the direction of travel of the vehicle and in the direction of a road surface;
wherein the movement of the at least one second step (3) is a purely linear movement, wherein the movement of the first step (2) in the direction of the passenger compartment begins only when the at least one second step (3) is in an intermediate position,
wherein the housing (10) comprises a first opening (103a, 103b) as a guide groove or first motion link which controls a movement of the first step (2) and a movement of the at least one second step (3) from the stowed position to an intermediate position and controls a movement of the second step (3) from the intermediate position to the boarding position, and
wherein the at least one second step (3) comprises an engagement element (109a, 109b) which engages into the first opening (103a, 103b) in the housing (10) and is located in the intermediate position approximately in the centre of the first opening (103a, 103b).

2. Step device as claimed in claim 1,
wherein a position of the first step (2) relative to the second step (3) does not change on the path from the stowed position to the intermediate position, and/or
wherein the first step (2) and the at least one second step (3) are locked in the stowed position and/or in the boarding position.

3. Step device as claimed in any one of the preceding claims,
wherein the first step (2) is coupled to the at least one second step (3) via a mechanism (7) which comprises in particular a connection element (71) which is connected to the first step (2) in a first rotary joint (G1a, G2a) and is connected to the at least one second step (3) in a second rotary joint (G1b, G2b).

4. Step device as claimed in any one of the preceding claims,
wherein the engagement element (109a, 109b) is preferably fixedly connected to the at least one second step (3) or is formed in one piece with the at least one second step (3); and/or
wherein the first opening (103a, 103b) in the housing (10) forms a stop for the engagement element (109a, 109b) in the boarding position and/or the stowed position of the at least one second step (3), and/or
wherein the housing (10) comprises a second opening (104a, 104b) as a guide groove or second motion link which controls the movement of the first step (2) from the stowed position to the boarding position.

5. Step device as claimed in any one of the preceding claims,
wherein the first step (2) comprises an engagement element (108a, 108b) which engages into the second opening (104a, 104b) in the housing (10), wherein the engagement element (108a, 108b) is preferably fixedly connected to the first step (2) or is formed in one piece with the first step (2); and/or wherein the second opening (104a, 104b) in the housing (10) forms a stop for the engagement element (108a, 108b) in the boarding position and/or the stowed position of the first step (2); and/or
wherein the housing (10) comprises a frame (10a) which comprises a first side part (101a), a second side part (101b) and a cross strut (102), and a first opening (103a, 103b) and a second opening (104a, 104b) are formed in the first side part (101a) and the second side part (101b).

6. Step device as claimed in any one of the preceding claims,
wherein at least one rotary joint (G1a, G1b; G2a, G2b) comprises an elongate hole (33a, 33b) which is formed in a step arm (21a, 31b; 21b, 31b) and in which an engagement element (24a, 24b) is pivotable and linearly displaceable; and/or
wherein the connection element (71) supports the first step (2) in the boarding position on the second step (3) and preferably locks same in the boarding position.

7. Step device as claimed in any one of the preceding claims,
wherein during the movement from the stowed position the first step (2) is moved relative to the vehicle upwards in the direction of the passenger compartment and downwards in the direction of the vehicle in order to minimise a gap between a side of the first step (2) facing the vehicle and a vehicle outer skin or vehicle sill (203).

8. Step device as claimed in any one of the preceding claims,
wherein a tread surface (21) of the first step (2) is arranged in the stowed position obliquely with respect to a tread surface (31) of the at least one second step (3), inclined preferably in the direction towards the tread surface (31) of the at least one second step (3) and/or
wherein a tread surface (21) of the first step (2) and a tread surface (31) of the at least one second step (3) extend in the boarding position in different planes and substantially in parallel with one another.

9. Step device as claimed in any one of the preceding claims,
wherein the first step (2) and the at least one second step (3) are arranged in the direction of travel of the vehicle or transverse thereto in an offset manner with respect to one another and preferably partially overlap and/or
wherein at least the first step (2) is located in the stowed position behind a downwardly protruding vehicle edge, e.g.
a vehicle sill (203), and the first step (2) passes below the vehicle edge during the movement to the stowed position.

10. Step device as claimed in any one of the preceding claims,
wherein a vertical distance (A3) between an inner base (202) of the vehicle and a first footboard (21) of the first step (2), a vertical distance (A2) between the first footboard (21) and a second footboard (31) of the at least one second step (3) and, when a vehicle is stationary on a flat plane, a vertical distance (A1) between the road surface (201) and the second footboard (31) are substantially equal.

11. Step device as claimed in any one of the preceding claims,
wherein the drive (4) is a hydraulically or pneumatically actuatable pressure cylinder (43) with an extendible piston rod (46) or a threaded rod with an electric drive and/or wherein the drive (4) can be activated and deactivated by means of a switch and/or a remote control, in particular in the cockpit, on the steering wheel, on the central console or on the door;
wherein the drive (4) is configured such that it can be activated only when the vehicle is stationary in order to move the step device (1) from the stowed position to the boarding position.

12. Step device as claimed in any one of the preceding claims,
wherein the step device (1) further comprises a controller and wherein the step assembly (1) comprises at least one sensor (6), in particular an optical sensor, speedometer, pressure sensor and/or gyroscopic sensor which is coupled to the controller in order to communicate the signals determined by the sensor to the controller, to process said signals therein and to relay said signals as control signals to the drive (4).

13. Step device as claimed in any one of the preceding claims,
wherein the optical sensor prevents the step device (1) from being moved from the stowed position if there is a risk of the step device (1) colliding with an obstacle and/or wherein the pressure sensor stops a movement of the step device (1) if a specified pressure force is exceeded.

14. Step device as claimed in any one of the preceding claims,
wherein at least one step (2, 3) is connected so as to be able to pivot about a pivot axis which is directed in parallel with a longitudinal axis (L) of the vehicle.

15. Step device as claimed in any one of the preceding claims,
wherein a gyroscopic sensor is provided which is configured to recognise an oblique position of the vehicle, wherein the controller calculates a correction value for the step device (1) in order to correct the orientation of the first and second footboard (21, 31) relative to the vehicle for at least partially compensating for the oblique position, and/or wherein the front edges of the steps (2, 3) facing away from the vehicle and/or the free face sides of the steps (2, 3) are provided with lighting elements (8) which illuminate when the step device (1) is located in the boarding position and/or is moved from the stowed position and/or from the boarding position.

## Revendications

1. Dispositif de marchepied qui peut être relié ou est relié à un véhicule,
comportant au moins deux marches (2, 3),
comportant un boîtier (10) qui présente une interface de liaison par laquelle le boîtier (10) peut être relié ou est relié à une partie d'un soubassement du véhicule,
comportant un entraînement (4) qui est conçu et disposé par rapport aux marches (2, 3) pour
- déplacer au moins une des marches (2, 3) d'une position de rangement, dans laquelle les marches (2, 3) sont disposées complètement sous le véhicule dans ou sur le boîtier (10), à une position de montée située latéralement à côté ou derrière le véhicule,
- lors du déplacement de la position de rangement à la position de montée, déplacer une première marche (2) dans une direction d'avancement du véhicule ou transversalement à celle-ci et vers le haut en direction d'un habitacle du véhicule et
- déplacer au moins une deuxième marche (3) dans la direction d'avancement du véhicule ou transversalement à celle-ci et vers le bas en direction d'une chaussée ;
dans lequel le déplacement de ladite au moins une deuxième marche (3) est un déplacement purement linéaire et le déplacement de la première marche (2) en direction de l'habitacle ne commence que lorsque ladite au moins une deuxième marche (3) est dans une position intermédiaire,
dans lequel le boîtier (10) comprend une première ouverture (103a, 103b) servant de rainure de guidage ou une première coulisse qui commande un déplacement de la première marche (2) et un déplacement de ladite au moins une deuxième marche (3) de la position de rangement à une position intermédiaire et un déplacement de la deuxième marche (3) de la position intermédiaire à la position de montée, et
dans lequel ladite au moins une deuxième marche (3) comprend un élément d'engagement (109a, 109b) qui s'engage dans la première ouverture (103a, 103b) du boîtier (10) et est situé approximativement au milieu de la première ouverture (103a, 103b) dans la position intermédiaire.

2. Dispositif de marchepied selon la revendication 1,
dans lequel une position de la première marche (2) par rapport à la deuxième marche (3) ne change pas sur le chemin de la position de rangement à la position intermédiaire, et/ou
dans lequel la première marche (2) et ladite au moins une deuxième marche (3) sont verrouillées dans la position de rangement et/ou dans la position de montée.

3. Dispositif de marchepied selon l'une des revendications précédentes, dans lequel la première marche (2) est accouplée à ladite au moins une deuxième marche (3) par un mécanisme (7) qui comprend en particulier un élément de liaison (71) qui est relié à la première marche (2) dans une première articulation tournante (G1a, G2a) et à ladite au moins une deuxième marche (3) dans une deuxième articulation tournante (G1b, G2b).

4. Dispositif de marchepied selon l'une des revendications précédentes,
dans lequel l'élément d'engagement (109a, 109b) est de préférence relié de manière rigide à ladite au moins une deuxième marche (3) ou formé d'une seule pièce avec ladite au moins une deuxième marche (3) ; et/ou
dans lequel la première ouverture (103a, 103b) dans le boîtier (10) forme une butée pour l'élément d'engagement (109a, 109b) dans la position de montée et/ou la position de rangement de ladite au moins une deuxième marche (3), et/ou dans lequel le boîtier (10) comprend une deuxième ouverture (104a, 104b) servant de rainure de guidage ou une deuxième coulisse qui commande le déplacement de la première marche (2) de la position de rangement à la position de montée.

5. Dispositif de marchepied selon l'une des revendications précédentes,
dans lequel la première marche (2) comprend un élément d'engagement (108a, 108b) qui s'engage dans la deuxième ouverture (104a, 104b) du boîtier (10), dans lequel l'élément d'engagement (108a, 108b) est de préférence relié de manière rigide à la première marche (2) ou formé d'une seule pièce avec la première marche (2) ; et/ou
dans lequel la deuxième ouverture (104a, 104b) du boîtier (10) forme une butée pour l'élément d'engagement (108a, 108b) dans la position de montée et/ou la position de rangement de la première marche (2) ; et/ou
dans lequel le boîtier (10) comprend un cadre (10a) qui comprend une première partie latérale (101a), une deuxième partie latérale (101b) et une traverse (102), et une première ouverture (103a, 103b) et une deuxième ouverture (104a, 104b) sont formées dans la première partie latérale (101a) et la deuxième partie latérale (101b).

6. Dispositif de marchepied selon l'une des revendications précédentes,
dans lequel au moins une articulation tournante (G1a, G1b ; G2a, G2b) comprend un trou oblong (33a, 33b) qui est formé dans un bras de marche (21a, 31b ; 21b, 31b) et dans lequel un élément d'engagement (24a, 24b) peut pivoter et coulisser linéairement ; et/ou
dans lequel l'élément de liaison (71) soutient la première marche (2) sur la deuxième marche (3) dans la position de montée et la verrouille de préférence dans la position de montée.

7. Dispositif de marchepied selon l'une des revendications précédentes, dans lequel, lors de son déplacement à partir de la position de rangement par rapport au véhicule, la première marche (2) est déplacée vers le haut en direction de l'habitacle et en direction du véhicule pour minimiser un espace entre un côté de la première marche (2) tourné vers le véhicule et une paroi extérieure de véhicule ou un seuil de porte de véhicule (203).

8. Dispositif de marchepied selon l'une des revendications précédentes,
dans lequel, dans la position de rangement, une surface de marche (21) de la première marche (2) est disposée obliquement par rapport à une surface de marche (31) de ladite au moins une deuxième marche (3), de préférence inclinée en direction de la surface de marche (31) de ladite au moins une deuxième marche (3), et/ou
dans lequel, dans la position de montée, une surface de marche (21) de la première marche (2) et une surface de marche (31) de ladite au moins une deuxième marche (3) s'étendent dans des plans différents et sensiblement parallèlement l'une à l'autre.

9. Dispositif de marchepied selon l'une des revendications précédentes,
dans lequel la première marche (2) et ladite au moins une deuxième marche (3) sont décalées l'une par rapport à l'autre dans la direction d'avancement du véhicule ou transversalement à celle-ci et, de préférence, se chevauchent partiellement et/ou
dans lequel, dans la position de rangement, au moins la première marche (2) se trouve derrière un bord de véhicule faisant saillie vers le bas, par exemple un seuil de porte de véhicule (203), et la première marche (2) passe sous le bord de véhicule lors du déplacement vers la position de rangement.

10. Dispositif de marchepied selon l'une des revendications précédentes, dans lequel une distance verticale (A3) entre un plancher intérieur (202) du véhicule et une première surface de marche (21) de la première marche (2), une distance verticale (A2) entre la première surface de marche (21) et une deuxième surface de marche (31) de ladite au moins une deuxième marche (3) et, lorsque le véhicule se trouve sur un plan plat, une distance verticale (A1) entre la chaussée (201) et la deuxième surface de marche (31) sont sensiblement égales.

11. Dispositif de marchepied selon l'une des revendications précédentes,
dans lequel l'entraînement (4) est un vérin (43) à commande hydraulique ou pneumatique avec une tige de piston déployable (46) ou une tige filetée avec un entraînement électrique et/ou dans lequel l'entraînement (4) peut être activé et désactivé au moyen d'un commutateur et/ou d'une télécommande, en particulier au tableau de bord, sur le volant, sur la console centrale ou sur la porte ;
dans lequel l'entraînement (4) est conçu de telle sorte qu'il ne peut être activé pour déplacer le dispositif de marchepied (1) de la position de rangement à la position de montée que lorsque le véhicule est à l'arrêt.

12. Dispositif de marchepied selon l'une des revendications précédentes, dans lequel le dispositif de marchepied (1) comprend en outre une unité de commande et le dispositif de marchepied (1) comprend au moins un capteur (6), en particulier un capteur optique, un compteur de vitesse, un capteur de pression et/ou un capteur gyroscopique, qui est couplé à l'unité de commande pour transmettre les signaux déterminés par le capteur à l'unité de commande afin qu'ils y soient traités et transmis en tant que signaux de commande à l'entraînement (4).

13. Dispositif de marchepied selon l'une des revendications précédentes,
dans lequel le capteur optique empêche le dispositif de marchepied (1) de quitter la position de rangement s'il existe un risque que le dispositif de marchepied (1) entre en collision avec un obstacle et/ou
dans lequel le capteur de pression arrête un déplacement du dispositif de marchepied (1) si une force de pression prédéfinie est dépassée.

14. Dispositif de marchepied selon l'une des revendications précédentes, dans lequel au moins une marche (2, 3) est reliée de manière pivotante autour d'un axe de pivotement orienté parallèlement à un axe longitudinal (L) du véhicule.

15. Dispositif de marchepied selon l'une des revendications précédentes,
dans lequel il est prévu un capteur gyroscopique qui est conçu pour détecter une position inclinée du véhicule, dans lequel l'unité de commande calcule une valeur de correction pour le dispositif de marchepied (1) afin de corriger l'orientation de la première et la deuxième surface de marche (21, 31) par rapport au véhicule pour compenser au moins partiellement la position inclinée, et/ou
dans lequel les bords avant des marches (2, 3) dirigés à l'opposé du véhicule et/ou les faces frontales libres des marches (2, 3) sont munis d'éléments lumineux (8) qui s'allument lorsque le dispositif de marchepied (1) est dans la position de montée et/ou est déplacé à partir de la position de rangement et/ou de la position de montée.
